# EUROPEAN PATENT SPECIFICATION

(11) **EP 4 676 768 B1**
(45) Date of publication and mention of the grant of the patent: **02.09.2026**
(21) Application number: 24717371.9
(22) Date of filing: 21.02.2024
(51) Int. Cl.: B60L 50/72, B60L 58/33, H01M 8/04029, H01M 8/04007, H01M 8/04701, F17C 1/00, H01M 8/0267, H01M 8/04089

(54) **FUEL CELL COOLING SYSTEM AND COOLING METHOD USING THE SYSTEM**
BRENNSTOFFZELLENKÜHLSYSTEM UND KÜHLVERFAHREN UNTER VERWENDUNG DES SYSTEMS
SYSTÈME DE REFROIDISSEMENT DE PILE À COMBUSTIBLE ET PROCÉDÉ DE REFROIDISSEMENT UTILISANT LE SYSTÈME

(30) Priority: 10.03.2023 CN 202310258137
(43) Date of publication of application: 14.01.2026
(73) Proprietor: Caterpillar Inc., Peoria, IL 61629-6450 (US)
(72) Inventor: QIN, Mengxue, Wuxi, Jiangsu 214028 (CN); YU, Lei, Wuxi, Jiangsu 214028 (CN); WANG, Yumei, Wuxi, Jiangsu 214028 (CN); LIU, Gengxin, Wuxi, Jiangsu 214028 (CN); ZHANG, Hailong, Wuxi, Jiangsu 214028 (CN)
(74) Representative: Novagraaf Group
(86) International application number: PCT/US2024/016598
(87) International publication number: WO 2024/191561

(56) References cited:
- CN-A- 112 242 539
- US-A1- 2020 298 651

## Description

### Technical Field

The present invention relates to a fuel cell system, particularly to a fuel cell cooling system and a cooling method using the system.

### Background

In the fuel cell cooling system, the cooling liquid flows through the cooling liquid flow channel between the anode and cathode plates of the fuel cell stack, and takes away the heat generated during the fuel cell operation by means of forced convection heat transfer. The cooling liquid can be deionized water or a mixture of water and ethylene glycol. The heated cooling liquid is cooled in the radiator so that the temperature of the cooling liquid decreases. Then, the cooled cooling liquid is sent to the fuel cell stack to cool the fuel cell stack.

In terms of radiator design, the fuel cell cooling system faces big challenges compared to a cooling water system for conventional diesel systems, which are mainly reflected in the following two points: 1) increased heat-exchanging amount required. The heat-exchanging amount by a radiator of a conventional diesel system accounts for about 33% of the engine power, while the radiator of a fuel cell system requires twice as much heat-exchanging amount as that of the conventional diesel system; 2) decreased temperature difference in heat-exchanging with the ambient air. The heat-exchanging temperature difference between the water tank temperature of the conventional oil-fueled vehicle and the ambient air temperature is about 55 degrees, while the heat-exchanging temperature difference between the cooling water temperature of the fuel cell system and the ambient air temperature is about 28 degrees. Due to the above two factors, the radiator in the fuel cell cooling system must be designed large enough, resulting in an increase in the manufacturing cost. A larger radiator requires a larger space, which further increases the difficulty in internal space design of the fuel cell vehicle.

Therefore, the present invention intends to overcome one or more of the above-mentioned problems.

CN112242539A discloses a thermal management system for fuel cell stack and a vehicle provided with the same. US2020/298651A1 discloses a cooling and heating system for hydrogen fuel vehicles.

### Summary of the Invention

With respect to the heat dissipation problem of the fuel cell, the present invention proposes an improved fuel cell cooling system, which acquires an improved heat dissipation effect without increasing the size of the radiator and thereby reduces the manufacturing cost of the system.

According to one aspect of the present invention, a fuel cell cooling system is provided, which comprises a cooling circuit in which a cooling liquid circulates, wherein the cooling circuit is provided with a fuel cell and a radiator configured for cooling the fuel cell, characterized in that the fuel cell cooling system further comprises a hydrogen evaporator for converting liquid hydrogen from a liquid hydrogen tank into gaseous hydrogen, and air passes through the hydrogen evaporator while exchanging heat with the hydrogen therein, wherein the hydrogen evaporator is arranged in an inlet air flow path of the radiator, so that the air precooled by the hydrogen evaporator can flow into the radiator as inlet air.

By means of the fuel cell cooling system according to the present invention, the air cooled by the hydrogen evaporator can be effectively utilized, and the cooling effect of the cooling liquid in the radiator can be greatly improved.

Advantageously, the hydrogen evaporator is connected to a hydrogen gas supply tank for the fuel cell, and an auxiliary connecting branch is provided between the liquid hydrogen tank and the hydrogen gas supply tank, and is provided with a throttle valve therein. Therefore, by adjusting the opening of the throttle valve, the demand for cold air from the hydrogen evaporator can be met without affecting the hydrogen supply to the fuel cell and the normal operation of the fuel cell.

According to another aspect of the present invention, a fuel cell cooling method implemented by the above-mentioned fuel cell cooling system is provided, which is characterized in that the fuel cell cooling method comprises a step of guiding surrounding air to flow sequentially through the hydrogen evaporator and the radiator.

Advantageously, the fuel cell cooling method comprises a step of adjusting opening of the throttle valve in the auxiliary connecting branch between the liquid hydrogen tank and the hydrogen gas supply tank according to a demand of vaporized hydrogen from the hydrogen evaporator. The adjustment of the opening of the throttle valve enables the hydrogen evaporator to be flexibly controlled or remain in a required load state, thus ensuring sufficient amount of cooling air flowing into the radiator, adjusting or controlling the temperature of the cooling liquid flowing out of the radiator, and indirectly regulating the cooling parameters of the fuel cell.

According to the fuel cell cooling system and cooling method of the present invention, heat absorption of liquid hydrogen owing to phase change is employed in the existing hydrogen evaporator on the fuel cell vehicle to lower the temperature of the air before entering the radiator, increase the heat-exchanging temperature difference between the cooling liquid temperature in the radiator and the air temperature, thereby increasing the heat-exchanging amount occurring in the radiator, and cooling the cooling liquid to a sufficiently low temperature. In addition, the purpose of reducing the size of the radiator or fan of the fuel cell cooling system is achieved, and the manufacturing cost of the system is reduced.

### Brief Description of the Drawings

Features and advantages of an example of the present invention will become apparent with reference to the following detailed description and drawings.

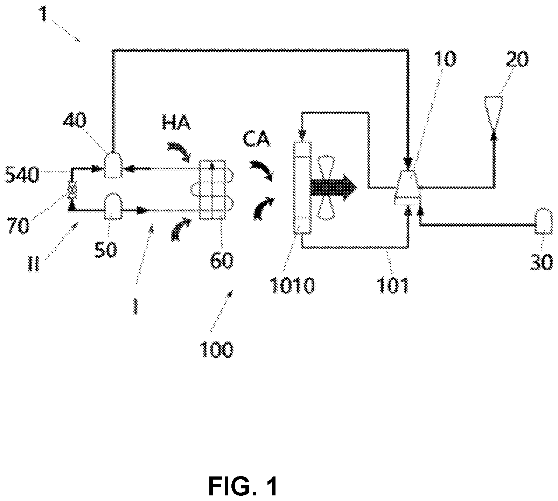

Fig. 1 is a schematic diagram of a fuel cell cooling system according to an embodiment of the present invention.

### Detailed Description of the Embodiments

The embodiments of the present invention are now described in detail below, examples of which are illustrated in the accompanying drawings. Whenever possible, the same reference numerals are used in all drawings to indicate the same or similar parts.

Referring to fig. 1, a fuel cell system 1 for a hydrogen-powered automobile, for example, includes a fuel cell (stack) 10, an exhaust gas processor 20 for treating fuel cell exhaust, a compressed air supply source 30 for supplying air to the fuel cell, a liquid hydrogen tank 50 for storing liquid hydrogen, a hydrogen gas supply tank 40 for supplying hydrogen gas to the fuel cell, and a hydrogen evaporator (hydrogen vaporizer) 60 configured for converting liquid hydrogen from the liquid hydrogen tank 50 into gaseous hydrogen and connected with the hydrogen gas supply tank 40.

The fuel cell cooling system 100 according to the present invention includes a cooling circuit 101 in which a cooling liquid circulates. The cooling circuit 101 is provided with a fuel cell 10 and a radiator (low-temperature water tank) 1010 configured to cool the fuel cell 10. The cooling liquid can be deionized water or a mixture of water and ethylene glycol. In the cooling circuit 101, the cooling liquid is pumped into the stack by a cooling liquid pump (not shown), flows out of the stack and then passes through the radiator. A relatively large amount of heat is taken away by the air passing through the radiator 1010, and the cooled cooling liquid flows out via the radiator outlet and enters the stack, takes away the residual heat of reaction inside the stack and goes back to the radiator where heat is transferred to the air outside the radiator, and then the cooling liquid returns to the inlet of the cooling liquid pump and enters the stack. This process goes on repeatedly to ensure that the fuel cell is always cooled within the normal temperature range.

In the embodiment shown in fig. 1, the fuel cell cooling system 100 further includes a hydrogen evaporator 60 for converting liquid hydrogen from the liquid hydrogen tank 50 into gaseous hydrogen. The hot air HA from the external environment passes through the hydrogen evaporator 60 while exchanging heat with the hydrogen therein, and the hydrogen in the hydrogen evaporator undergoes a phase change, which absorbs heat in the hot air HA. As a result, the air flowing through the hydrogen evaporator 60 is cooled to produce cold air CA with a reduced temperature. In the illustrated embodiment, the hydrogen evaporator 60 is arranged on the inlet air flow path of the radiator 1010, making the air cooled by the hydrogen evaporator 60 flow into the radiator under the action of, for example, a fan arranged close to the radiator 1010. Therefore, the air CA cooled by the hydrogen evaporator 60 lowers the temperature of the inlet air outside the radiator, increases the temperature difference between the cooling liquid inside the radiator and the air outside the radiator, and enhances the cooling effect on the cooling liquid, which makes it possible to meet the cooling requirement of the fuel cell 10 without increasing the size of the radiator. **In** this way, the size of the radiator of the cooling system is indirectly reduced and the manufacturing cost of the whole system is reduced.

The expression "the hydrogen evaporator is arranged in an inlet air flow path of the radiator" here means that at least one air stream flows into the radiator as inlet air along the inlet air flow path of the radiator after heat-exchanging with the hydrogen in the hydrogen evaporator, where the inlet air path of the radiator can be defined by a physical boundary (such as a guide pipe) or a flow field formed within the range of action of a fan of the radiator.

Although it is shown in Fig. 1 that a fan is provided downstream of the radiator in the air flow direction, it can be understood by those skilled in the art that the fan can also be arranged upstream of the radiator or upstream of the hydrogen evaporator, as long as the air is forced to flow through the hydrogen evaporator and the radiator in turn.

Referring to fig. 1, the liquid hydrogen tank 50, hydrogen evaporator 60 and hydrogen gas supply tank 40 are connected in sequence to form a first hydrogen phase change flow path I. The liquid hydrogen tank 50 and the hydrogen gas supply tank 40 are connected via an auxiliary connecting branch 540 to form a second hydrogen phase change flow path II. The first hydrogen phase change flow path and the second hydrogen phase change flow path are connected in parallel with each other. As shown in the figure, the auxiliary connecting branch 540 of the second hydrogen phase change flow path II is provided with a throttle valve 70 therein. The amount of hydrogen subjected to phase change varies with the opening of the throttle valve 70. Thus, the amount of hydrogen flowing into the hydrogen gas supply tank 40 can be changed by adjusting the opening of the throttle valve.

The arrangement of the second hydrogen phase change flow path II makes it possible to flexibly control/adjust the temperature of the cooling liquid in the radiator 1010. For example, in the initial stage of fuel cell start-up, less heat is generated in the fuel cell operation, and the hydrogen evaporator in the first hydrogen phase change flow path I may not start or operate with a low amount of vaporized hydrogen, while by increasing the opening of the throttle valve 70, enough hydrogen gas to be supplied to the fuel cell is generated by means of the second hydrogen phase change flow path II so as to meet the operating requirements of the fuel cell. At the same time, the temperature of the cooling liquid in the cooling circuit 101 can be favorably regulated.

### Industrial Applicability

In order that the present invention is better understood, the cooling method implemented by the fuel cell cooling system of the present invention is described below:
Referring to fig. 1, cooling liquid is circulated in a cooling circuit 101 by means of a cooling liquid pump to transfer the heat generated during the operation of a fuel cell to a radiator 1010 where the cooling liquid exchanges heat with the air CA flowing into the radiator 1010 under the action of a fan. In the present invention, because the hydrogen evaporator 60 is arranged on the air inlet air flow path of the radiator 1010, the hot air HA is first cooled by the hydrogen evaporator 60 before flowing into the radiator. That is to say, the ambient air HA is guided through the hydrogen evaporator 60 and the radiator 1010 in turn, which greatly reduces the inlet air temperature of the radiator, increases the temperature difference between the cooling liquid in the radiator and the air flowing through the radiator, and improves the overall heat-exchanging efficiency of the radiator, thus overcoming the problem that the radiator has to be enlarged due to a too small temperature difference between the cooling liquid and the air in the existing fuel cell cooling system.

In addition, by arranging a second hydrogen phase change flow path II, particularly by adjusting the opening of the throttle valve 70 in the auxiliary connecting branch 540 between the liquid hydrogen tank 50 and the hydrogen gas supply tank 40 according to the required amount of vaporized hydrogen from the hydrogen evaporator (the hydrogen supply required by the fuel cell is constant under specific operating conditions), it is ensured that the required amount of vaporized hydrogen of the first hydrogen phase change flow path I is always met, and the temperature of the cold air CA in the inlet air flow path of the radiator 1010 and the temperature of the cooling liquid in the radiator 1010 are also guaranteed.

These are merely some exemplary embodiments of the fuel cell cooling system and cooling method according to the present invention. The cooling system, however, is not limited to the specific embodiments described here; instead, each component can be used independently and separately with respect to other components described here. The expressions like "one example", "another example" and "examples" mentioned throughout the specification mean that a member/element (such as feature, structure and/or characteristic) related to an example is included in at least one example described here, and may or may not appear in other examples. In addition, it will be appreciated that multiple elements in any example can be combined across many different examples in any suitable way, unless otherwise expressly stated above and below.

In the specification, the present invention is disclosed and made implementable for any skilled in the art with reference to the embodiments, including the optimal embodiments. The scope of the present invention is defined by the claims.

## Claims

1. A fuel cell cooling system (100), comprising a cooling circuit (101) in which a cooling liquid circulates, wherein the cooling circuit is provided with a fuel cell (10) and a radiator (1010) configured for cooling the fuel cell, wherein the fuel cell cooling system further comprises a hydrogen evaporator (60) for converting liquid hydrogen from a liquid hydrogen tank (50) into gaseous hydrogen, and **characterized in that** air passes through the hydrogen evaporator while exchanging heat with the hydrogen therein, wherein the hydrogen evaporator is arranged in an inlet air flow path of the radiator, so that the air precooled by the hydrogen evaporator can flow into the radiator as inlet air.

2. The fuel cell cooling system according to claim 1, **characterized in that** the hydrogen evaporator is connected to a hydrogen gas supply tank (40) for the fuel cell, and an auxiliary connecting branch (540) is provided between the liquid hydrogen tank and the hydrogen gas supply tank, and is provided with a throttle valve (70) therein.

3. A fuel cell cooling method implemented by a fuel cell cooling system according to claim 1 or 2, **characterized in that** the fuel cell cooling method comprises a step of guiding surrounding air to flow sequentially through the hydrogen evaporator and the radiator.

4. The fuel cell cooling method according to claim 3 when dependent upon claim 2, **characterized by** comprising a step of adjusting opening of a throttle valve in the auxiliary connecting branch between the liquid hydrogen tank and the hydrogen gas supply tank according to a demand of vaporized hydrogen from the hydrogen evaporator.

## Patentansprüche

1. Brennstoffzellenkühlsystem (100), umfassend einen Kühlkreislauf (101), in dem eine Kühlflüssigkeit zirkuliert, wobei der Kühlkreislauf mit einer Brennstoffzelle (10) und einem Kühler (1010), der zum Kühlen der Brennstoffzelle konfiguriert ist, versehen ist, wobei das Brennstoffzellenkühlsystem ferner einen Wasserstoffverdampfer (60) zum Umwandeln von Flüssigwasserstoff aus einem Flüssigwasserstofftank (50) in gasförmigen Wasserstoff umfasst, und
**dadurch gekennzeichnet, dass** Luft durch den Wasserstoffverdampfer strömt, während Wärme mit dem darin befindlichen Wasserstoff ausgetauscht wird, wobei der Wasserstoffverdampfer in einem Einlassluftströmungspfad des Kühlers angeordnet ist, sodass die Luft, die durch den Wasserstoffverdampfer vorgekühlt ist, als Einlassluft in den Kühler strömen kann.

2. Brennstoffzellenkühlsystem nach Anspruch 1,
**dadurch gekennzeichnet, dass** der Wasserstoffverdampfer mit einem Wasserstoffgasversorgungstank (40) für die Brennstoffzelle verbunden ist und ein Hilfsverbindungszweig (540) zwischen dem Flüssigwasserstofftank und dem Wasserstoffgasversorgungstank bereitgestellt ist und mit einem Drosselventil (70) darin versehen ist.

3. Brennstoffzellenkühlverfahren, das durch ein Brennstoffzellenkühlsystem nach Anspruch 1 oder 2 implementiert wird, **dadurch gekennzeichnet, dass** das Brennstoffzellenkühlverfahren einen Schritt eines Leitens von Umgebungsluft umfasst, sodass diese nacheinander durch den Wasserstoffverdampfer und den Kühler strömt.

4. Brennstoffzellenkühlverfahren nach Anspruch 3 in Abhängigkeit von Anspruch 2, **gekennzeichnet durch** das Umfassen eines Schritts eines Einstellens einer Öffnung eines Drosselventils in dem Hilfsverbindungszweig zwischen dem Flüssigwasserstofftank und dem Wasserstoffgasversorgungstank gemäß einem Bedarf an verdampftem Wasserstoff aus dem Wasserstoffverdampfer.

## Revendications

1. Système de refroidissement de pile à combustible (100), comprenant un circuit de refroidissement (101) dans lequel circule un liquide de refroidissement, dans lequel le circuit de refroidissement est pourvu d'une pile à combustible (10) et d'un radiateur (1010) conçu pour refroidir la pile à combustible, dans lequel le système de refroidissement de pile à combustible comprend en outre un évaporateur d'hydrogène (60) pour convertir de l'hydrogène liquide à partir d'un réservoir d'hydrogène liquide (50) en hydrogène gazeux, et
**caractérisé en ce que** l'air passe à travers l'évaporateur d'hydrogène tout en échangeant de la chaleur avec l'hydrogène qui s'y trouve, dans lequel l'évaporateur d'hydrogène est disposé dans une voie d'écoulement d'air d'entrée du radiateur, de sorte que l'air prérefroidi par l'évaporateur d'hydrogène peut s'écouler dans le radiateur en tant qu'air d'entrée.

2. Système de refroidissement de pile à combustible selon la revendication 1, **caractérisé en ce que** l'évaporateur d'hydrogène est relié à un réservoir d'alimentation en hydrogène gazeux (40) pour la pile à combustible, et une branche de raccordement auxiliaire (540) est prévue entre le réservoir d'hydrogène liquide et le réservoir d'alimentation en hydrogène gazeux, et est pourvue d'un robinet d'étranglement (70) à l'intérieur.

3. Procédé de refroidissement de pile à combustible mis en œuvre par un système de refroidissement de pile à combustible selon la revendication 1 ou 2, **caractérisé en ce que** le procédé de refroidissement de pile à combustible comprend une étape consistant à guider l'air environnant pour qu'il s'écoule séquentiellement à travers l'évaporateur d'hydrogène et le radiateur.

4. Procédé de refroidissement de pile à combustible selon la revendication 3 lorsqu'elle dépend de la revendication 2, **caractérisé en ce qu'il** comprend une étape d'ajustement de l'ouverture d'un robinet d'étranglement dans la branche de raccordement auxiliaire entre le réservoir d'hydrogène liquide et le réservoir d'alimentation en hydrogène gazeux en fonction d'une demande d'hydrogène vaporisé provenant de l'évaporateur d'hydrogène.
